# EUROPÄISCHE PATENTSCHRIFT

(11) **EP 2 771 600 B1**
(45) Veröffentlichungstag und Bekanntmachung des Hinweises auf die Patenterteilung: **16.09.2015**
(21) Anmeldenummer: 13709044.5
(22) Anmeldetag: 04.02.2013
(51) Int. Cl.: F16K 11/078, F16K 27/04

(54) **EINHANDHEBELMISCHERKARTUSCHE**
SINGLE-LEVER MIXING CARTRIDGE
CARTOUCHE POUR MÉLANGEUR MONOCOMMANDE

(30) Priorität: 28.02.2012 DE 202012100685 U
(43) Veröffentlichungstag der Anmeldung: 03.09.2014
(73) Patentinhaber: Flühs Drehtechnik GmbH, 58515 Lüdenscheid (DE)
(72) Erfinder: LANGE, Lutz, 58511 Lüdenscheid (DE)
(74) Vertreter: Patentanwälte Dörner & Kötter PartG mbB
(86) Internationale Anmeldenummer: PCT/EP2013/052159
(87) Internationale Veröffentlichungsnummer: WO 2013/127602

(56) Entgegenhaltungen:
- DE-C2- 3 991 752
- US-A- 5 375 624

## Beschreibung

Die Erfindung betrifft eine Einhandhebelmischerkartusche, umfassend ein Kopfstück, das ein Bodenstück aufnimmt, sowie eine Scheibensteuerung mit einer Steuerscheibe, welche über eine zumindest schwenkbar gelagerte Spindel verschiebbar angeordnet ist.

In Sanitärarmaturen werden häufig Mischerkartuschen eingesetzt, in denen eine eine Steuerscheibe sowie eine Durchlassscheibe aufweisende Scheibensteuerung angeordnet ist, welche über einen einzigen Hebel derart bedienbar ist, dass sowohl die Wassermenge, als auch die Wassertemperatur über ein und denselben Hebel steuerbar ist. Derartige austauschbare Kartuschen können in unterschiedlich gestalteten Armaturengehäusen eingesetzt werden. In einigen Anwendungsgebieten kommen auch modifizierte Kartuschen zum Einsatz, bei denen ein konstantes Mischungsverhältnis eingestellt ist, wobei die Drehbewegung des Hebels blockiert ist, sodass nur über die Schwenkbewegung des Hebels eine Einstellung der Wassermenge erfolgen kann. Diese Ausführung kommt auch in solchen Anwendungsgebieten zum Einsatz, in denen nur ein Zulaufkanal in der Armatur vorhanden ist.

Aus der US 5 375 624 A wird eine gattungsgemäße Mischerkartusche bekannt.

Bei der Gestaltung von Armaturengehäusen besteht zunehmend der Wunsch nach einem möglichst kleinen Aufbau. Daher ist es erforderlich, die Mischerkartuschen klein und kompakt aufzubauen, wobei gleichzeitig die Anforderung nach einer großen Wassermenge gegeben ist. Mischerkartuschen sind regelmäßig aus Kunststoffspritzgussteilen zusammengesetzt, wobei aufgrund der kleinen Dimensionierung der Bauteile, verbunden mit großzügig dimensionierten Durchlassöffnungen für den Wasserdurchtritt bereichsweise nur geringe Materialstärken vorhanden sind.

Mischerkartuschen der vorgenannten Art kommen werden in Sanitärarmaturen eingesetzt und bodenseitig über eine Dichtung innerhalb der Armatur jedenfalls gegenüber dem dort angeordneten Wasserzulauf abgedichtet. Hierzu wird die Kartusche über eine Mutter gegenüber der Armatur vorgespannt. Je nach Ausführung der Armatur können unterschiedliche Muttern zum Einsatz kommen, welche der entsprechenden Kartusche zugeordnet werden müssen. Durch eine fehlerhafte Zuordnung kann es hier zu einem Erhöhten Arbeitsaufwand kommen.

Hier will die Erfindung Abhilfe schaffen. Der Erfindung liegt die Aufgabe zugrunde, eine Einhandhebelmischerkartusche zu schaffen, bei der Aufwendungen aufgrund fehlender oder fehlerhaft zugeordneter Spannmuttern vermieden sind. Gemäß der Erfindung wird diese Aufgabe durch die Merkmale des kennzeichnenden Teils des Patentanspruchs 1 gelöst.

Mit der Erfindung ist eine Einhandhebelmischerkartusche geschaffen, bei der Aufwendungen aufgrund fehlender oder fehlerhaft zugeordneter Spannmuttern vermieden sind. Durch die Anordnung eines ein Außengewinde aufweisenden Befestigungsrings, der auf das Kopfstück aufgesteckt und auf diesem verliersicher gehalten ist, entfällt eine separate Zuordnung einer Spannmutter im Zuge der Montage der Mischerkartusche. Es ist an dem Befestigungsring an seinem dem Kopfstück zugewandten Ende zumindest bereichsweise eine um-läufende Rastnase angeformt, die in eine umlaufend außen in dem Kopfstück eingebrachte Rastnut eingreift.

In Ausgestaltung der Erfindung ist an dem Kopfstück an seinem dem Befestigungsring zugewandten Ende zumindest bereichsweise umlaufend eine radial nach außen gerichtete Haltenase angeformt, deren Außendurchmesser im Wesentlichen gleich dem Innendurchmesser des Befestigungsrings ist. Hierdurch ist eine einfache Montage des anschließend verliersicher gehaltenen Befestigungsrings an der Kartusche ermöglicht. Hierzu wird der Befestigungsring mit seiner umlaufenden Rastnase mit Kraft über die nach außen gerichtete Haltenase des Kopfstücks geschoben, welche kurzfristig geringfügig elastisch verformt wird. Nach Überwindung der Rastnase verformt sich diese wieder in ihre ursprüngliche Form zurück, wodurch der Befestigungsring an dem Kopfstück verliersicher gehalten ist.

In Weiterbildung der Erfindung ist die Spindel in einer Spindelaufnahme schwenkbar gehalten ist, die in dem Kopfstück drehbar gehalten ist. Dabei ist vorzugsweise an der Spindelaufnahme wenigstens ein radial nach außen kragender Stift angeordnet, der in einer Führung des Kopfstücks geführt ist. Hierdurch ist ein Anschlag der Spindel für beide Drehrichtungen gebildet.

Vorteilhaft ist in der Spindelaufnahme eine radiale Durchgangsbohrung eingebracht, durch die ein Stift geführt ist, der die Spindelaufnahme an zwei gegenüberliegenden Seiten radial überragt und der die Schwenkachse für die Spindel bildet, der eine Durchbohrung aufweist, durch die der Stift geführt ist. Hierdurch ist eine einfache Montage der Spindel ermöglicht.

In weiterer Ausgestaltung der Erfindung ist die Führung durch wenigstens eine Ausnehmung gebildet, in welcher der Stift eingreift und deren Seitenwände eine Anschlagbegrenzung für den Stift bilden. Hierdurch ist ein einfach herzustellender, zuverlässiger Anschlag erzielt.

In weiterer Ausgestaltung der Erfindung ist die Ausnehmung nach oben hin offen ausgebildet und durch den auf das Kopfstück aufgebrachten Befestigungsring geschlossen. Hierdurch ist die Montage der Mischerkartusche weiter vereinfacht. Die einzelnen Komponenten können so von oben her nacheinander in das Kopfstück einbracht werden, wobei der Stift der Spindel in der Ausnehmung des Kopfstücks aufliegt. Durch die nachfolgende Montage des Befestigungsrings wird die Ausnehmung mit dem in dieser befindlichen Stift verschlossen. Ausnehmung und Befestigungsring bilden nun die Führung und den Anschlag für den als Schenkachse der Spindel dienenden Stift.

In Weiterbildung der Erfindung weist die Spindelaufnahme an ihrer dem Bodenstück zugewandten Seite eine Aufnahme für ein Gleitstück auf, in welche die Spindel hineinragt. Dabei ist in dem Gleitstück bevorzugt eine Öffnung eingebracht, in welche die Spindel endseitig eingreift, über welche Spindel das Gleitstück auf der Spindelaufnahme auf ihrer der Steuerscheibe zugewandten Endfläche verschiebbar ist. Hierdurch ist eine einfach montierbare und zuverlässige Scheibensteuerung ermöglicht.

Vorteilhaft ist an dem Gleitstück wenigstens ein aus seiner der Spindelaufnahme abgewandten Oberfläche axial hervorstehender Steg angeformt, der in eine Ausnehmung der Steuerscheibe eingreift. Hierdurch ist die Steuerscheibe mit dem Gleitstück formschlüssig verbunden.

In Ausgestaltung der Erfindung ist in dem Bodenstück an seiner der Steuerscheibe zugewandten Seite eine Aufnahme zur drehfesten Anordnung einer Durchlassscheibe eingebracht ist. Dabei ist die Aufnahme bevorzugt durch umlaufend angeordnete Stege gebildet, welche in Aussparungen, die seitlich in der Durchlassscheibe angeordnet sind, eingreifen. Die Rippen beschreiben besonders bevorzugt einen Kreisbogen, dessen Durchmesser etwa gleich dem Innendurchmesser des Kopfteils ist, wobei an den Stegen eine Nase angeformt ist, die in eine hierzu korrespondierende Aussparung der Durchlassscheibe eingreift.

Bevorzugt ist das Kopfstück aus Metall, vorzugsweise aus Messing hergestellt. Hierdurch ist einer Formänderung des Kopfstücks aufgrund der mittels des Befestigungsrings aufgebrachten Vorspannkraft vermieden.

Andere Weiterbildungen und Ausgestaltungen der Erfindung sind in den übrigen Unteransprüchen angegeben. Ein Ausführungsbeispiel der Erfindung ist in den Zeichnungen dargestellt und wird nachfolgend im Einzelnen beschrieben. Es zeigen:
- Figur 1: die schematische Darstellung einer in eine Armatur mit Seitenauslauf angeordneten Einhandhebelmischerkartusche im Längsschnitt (geschlossene Stellung);
- Figur 2: die Einhandhebelmischerkartusche aus Figur 1 in geöffneter Stellung;

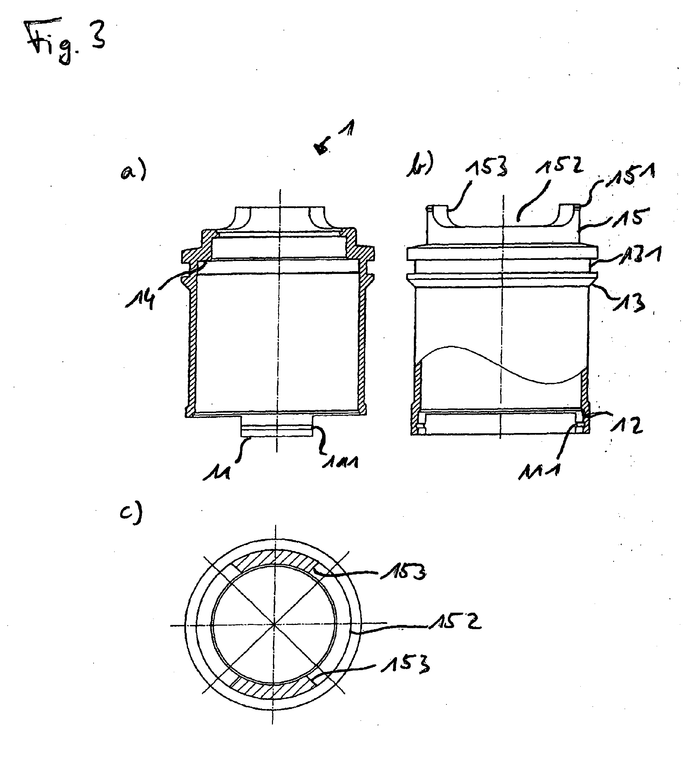

- Figur 3: die schematische Darstellung des Kopfstücks der Mischerkartusche aus Figur 1
a) im Längsschnitt
b) im Teilschnitt (um 90° verdreht),
c) im Querschnitt;

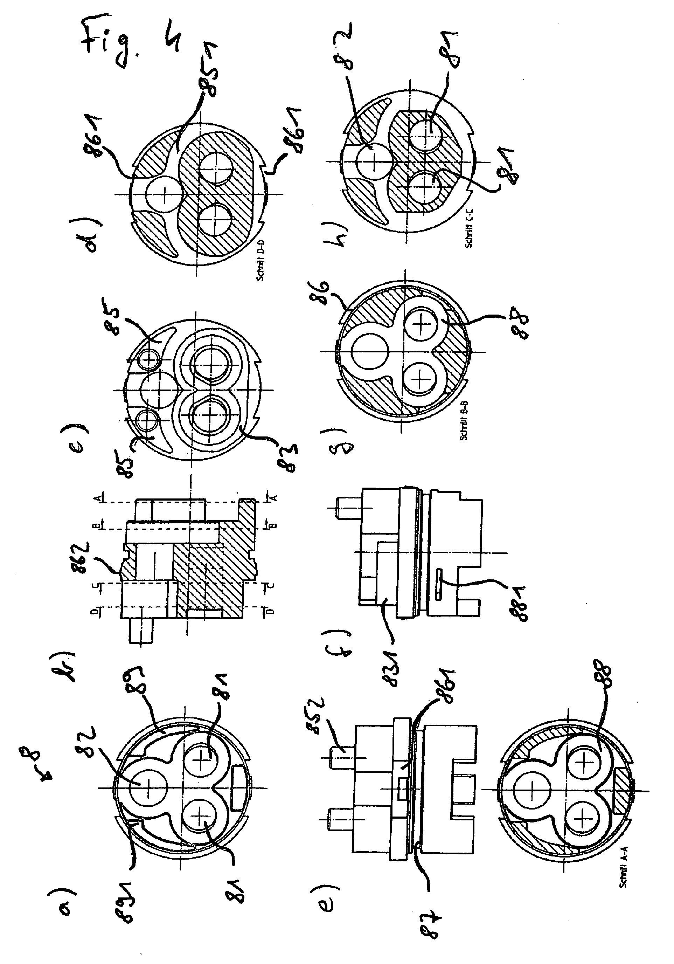

- Figur 4: die Darstellung des Bodenstücks der Mischerkartusche aus Figur 1
a) in der Draufsicht,
b) im Längsschnitt,
c) in der Ansicht von unten,
d) im Schnitt D-D der Darstellung aus b),
e) in der Seitenansicht,
f) im der Seitenansicht (um 90° verdreht),
g) im Schnitt B-B der Darstellung aus b),
h) im Schnitt C-C der Darstellung aus b),
i) im Schnitt A-A der Darstellung aus b);

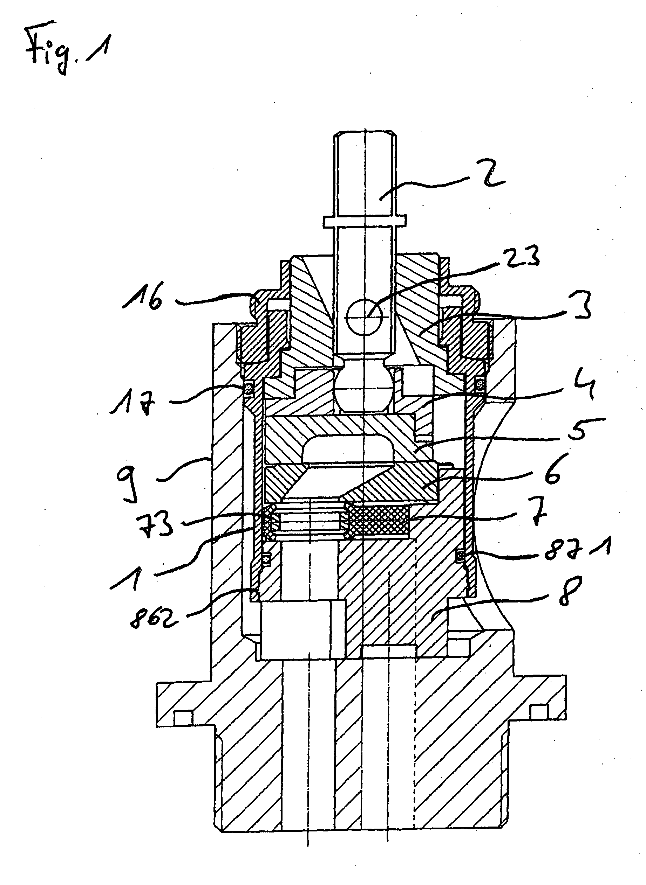

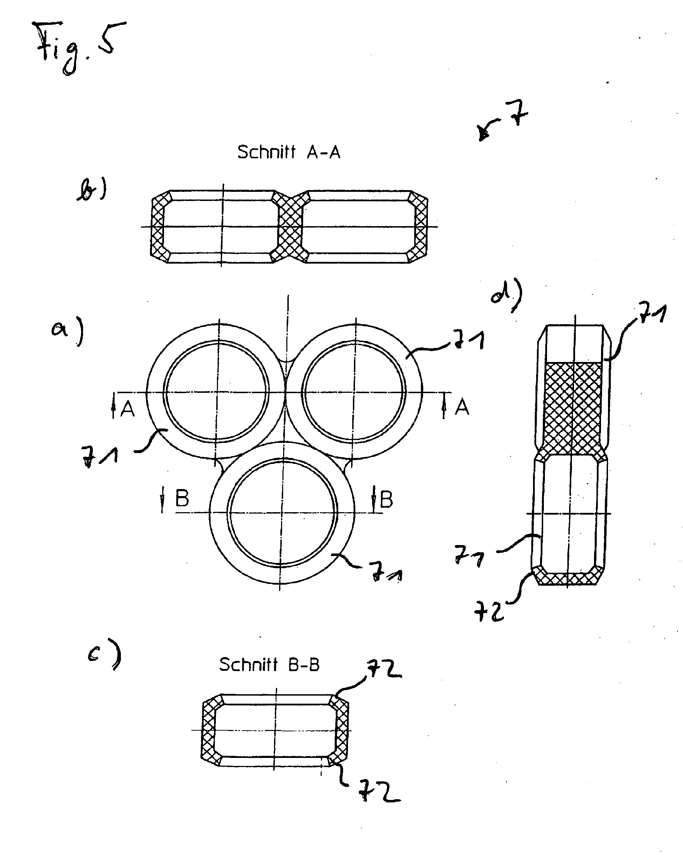

- Figur 5: die Darstellung des Lippendichtungsformteils der Mischerkartusche aus Figur 1
a) in der Draufsicht,
b) im Schnitt A-A der Darstellung aus a),
c) im Schnitt B-B der Darstellung aus a),
d) im Querschnitt;

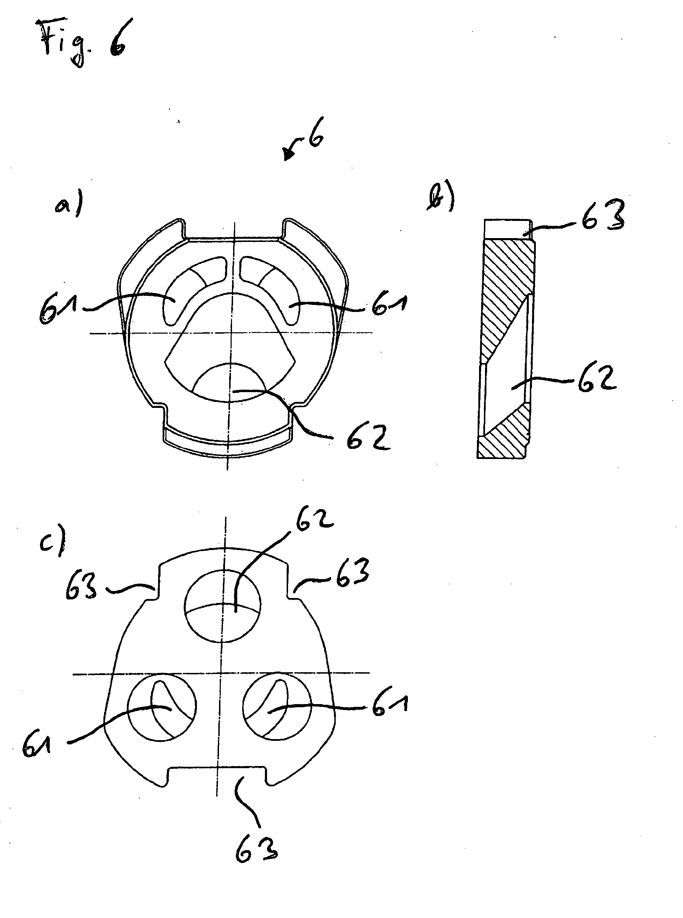

- Figur 6: die Darstellung der Durchlassscheibe der Mischerkartusche aus Figur 1
a) in der Ansicht von unten,
b) im Querschnitt,
c) in der Draufsicht;

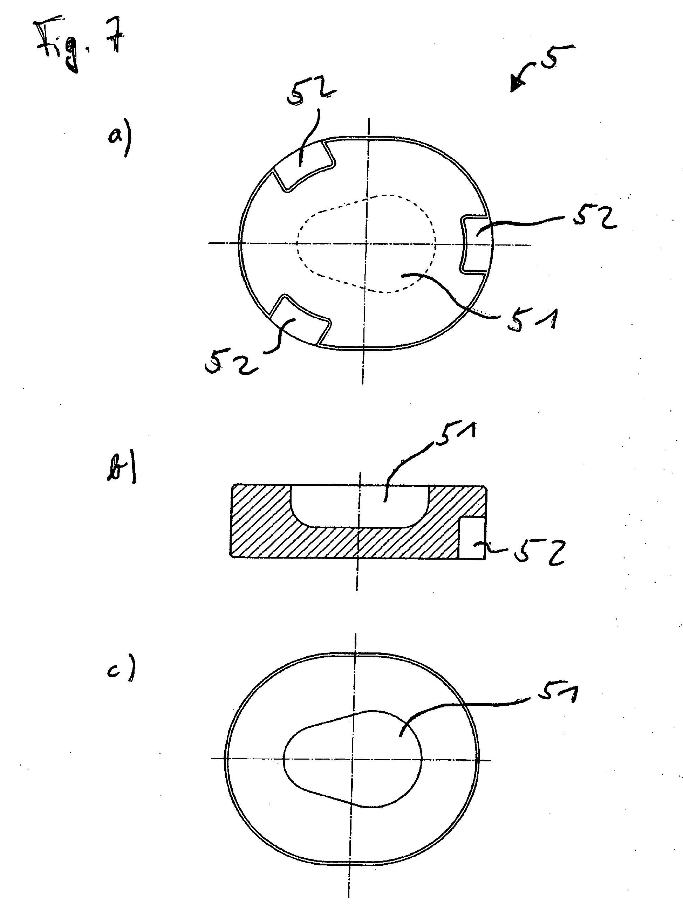

- Figur 7: die Darstellung der Steuerscheibe der Mischerkartusche aus Figur1
a) in der Ansicht von unten,
b) im Querschnitt,
c) in der Draufsicht;

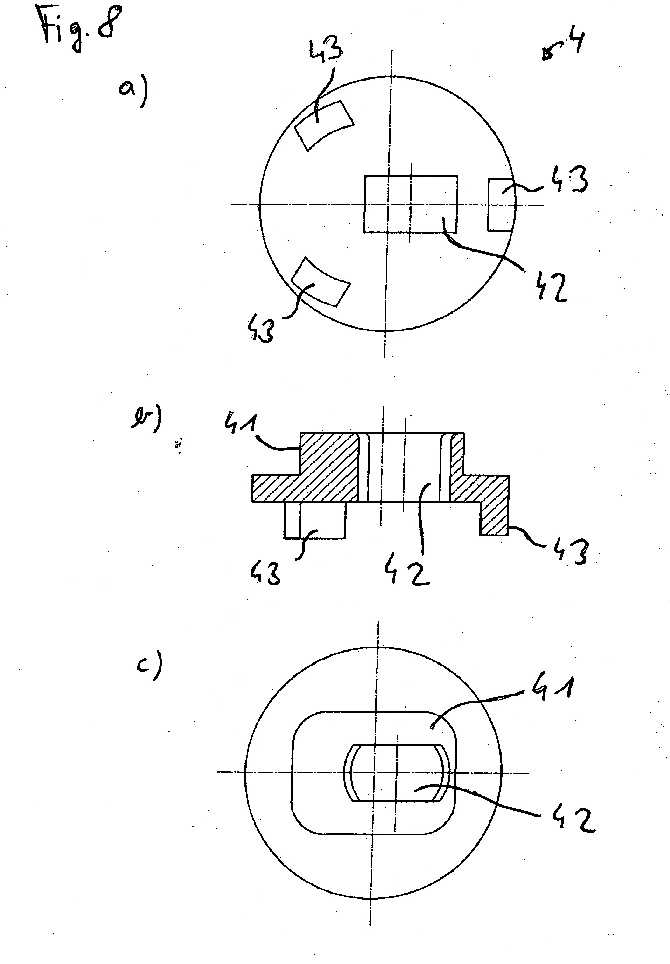

- Figur 8: die Darstellung des Gleitstücks der Mischerkartusche aus Figur 1
a) in der Ansicht von unten,
b) im Querschnitt,
c) in der Draufsicht;

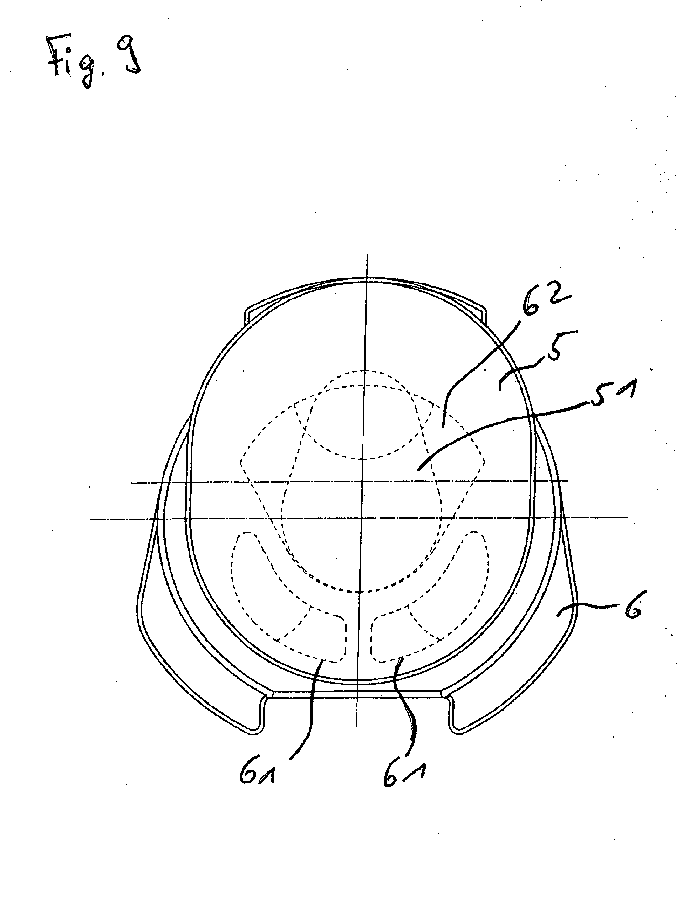

- Figur 9: die Scheibensteuerung der Mischerkartusche aus Figur 1 mit Steuerscheibe und Durchlassscheibe in der Position "geschlossen";

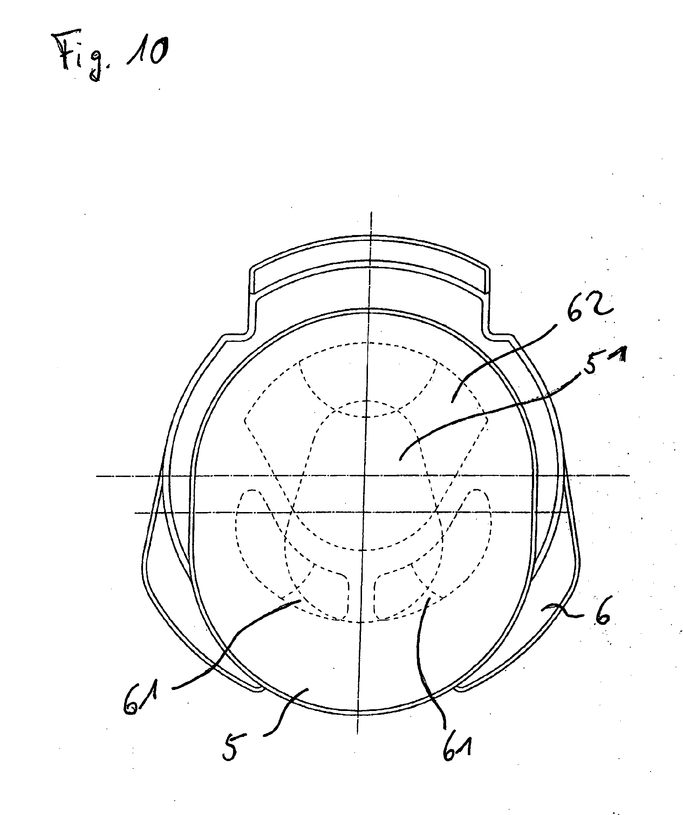

- Figur 10: die Scheibensteuerung aus Figur 9 in der Position "Mischwasser";

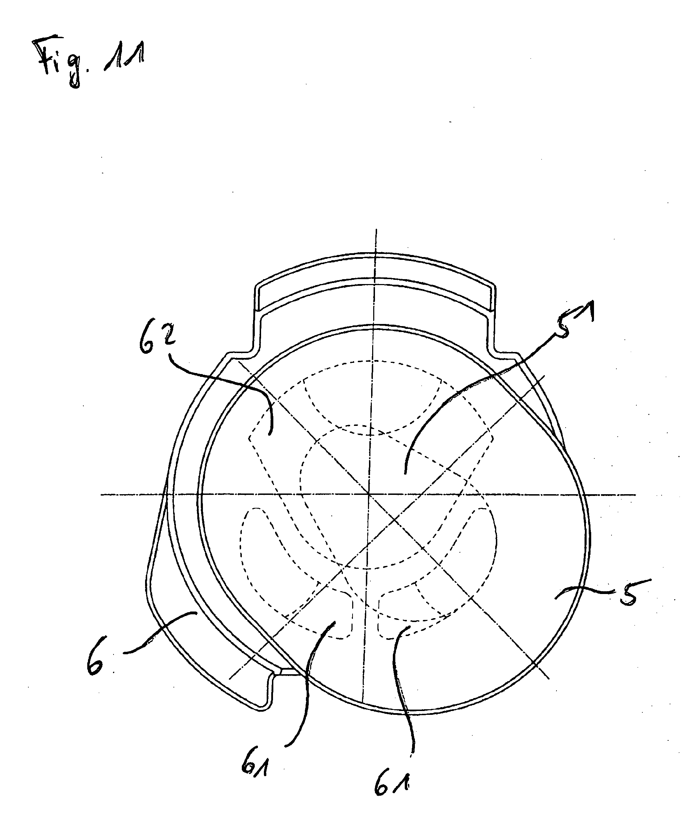

- Figur 11: die Scheibensteuerung aus Figur 9 in der Position "kaltwasser";

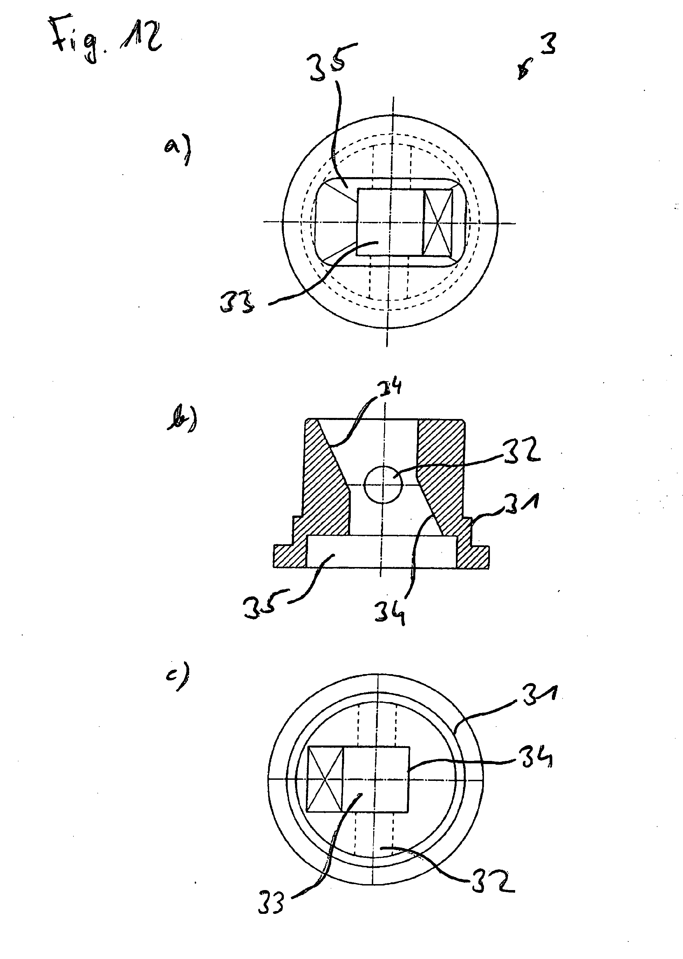

- Figur 12: die Spindelaufnahme der Mischerkartusche aus Figur 1
a) in der Ansicht von unten,
b) im Querschnitt,
c) in der Draufsicht;

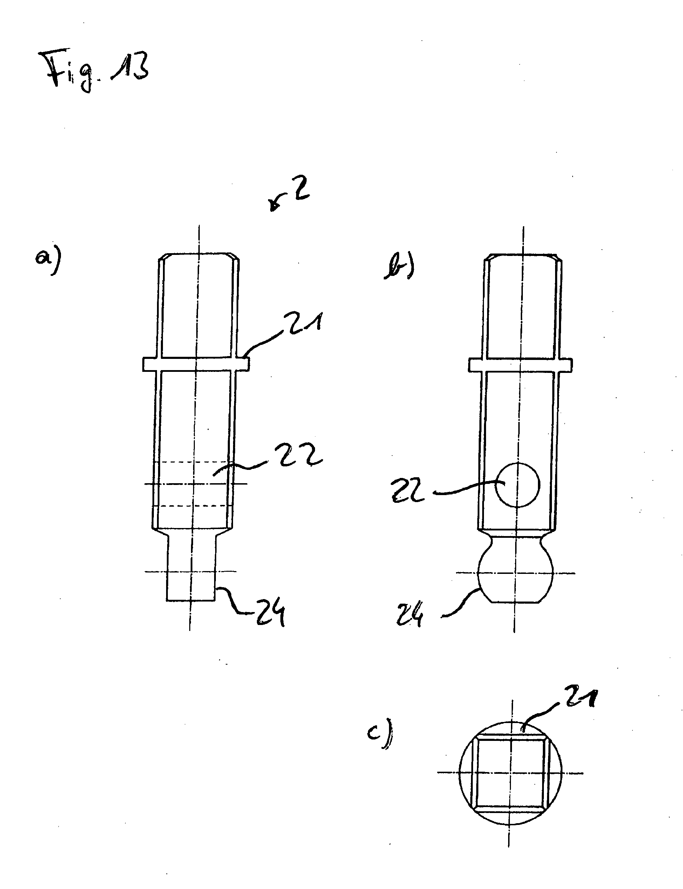

- Figur 13: die Spindel der Mischerkartusche aus Figur 1
a) in der Seitenansicht,
b) in der Vorderansicht,
c) in der Draufsicht;

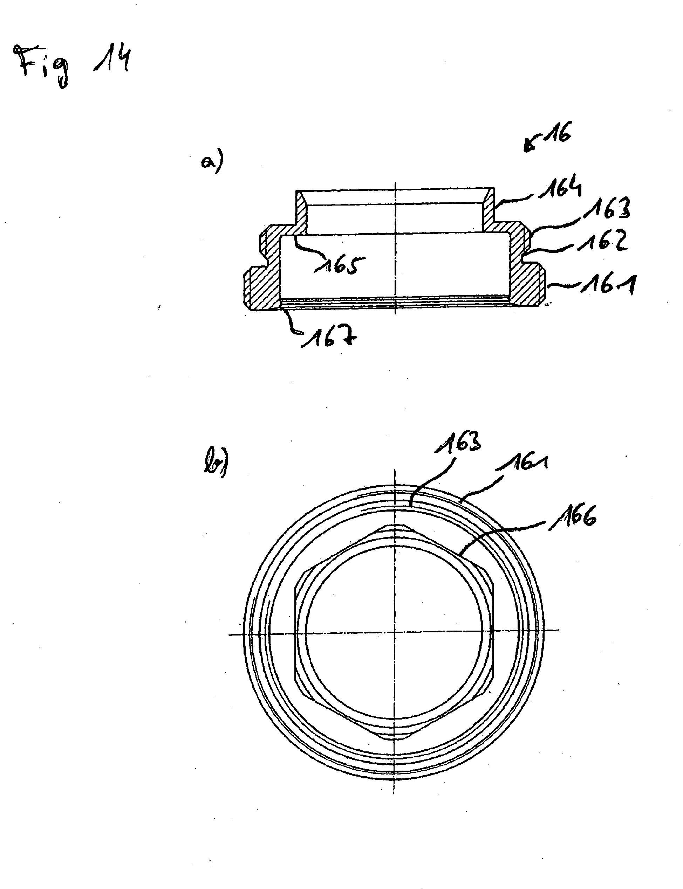

- Figur 14: den Befestigungsring der Mischerkartusche aus Figur 1
a) in Schnittdarstellung,
b) in der Draufsicht und

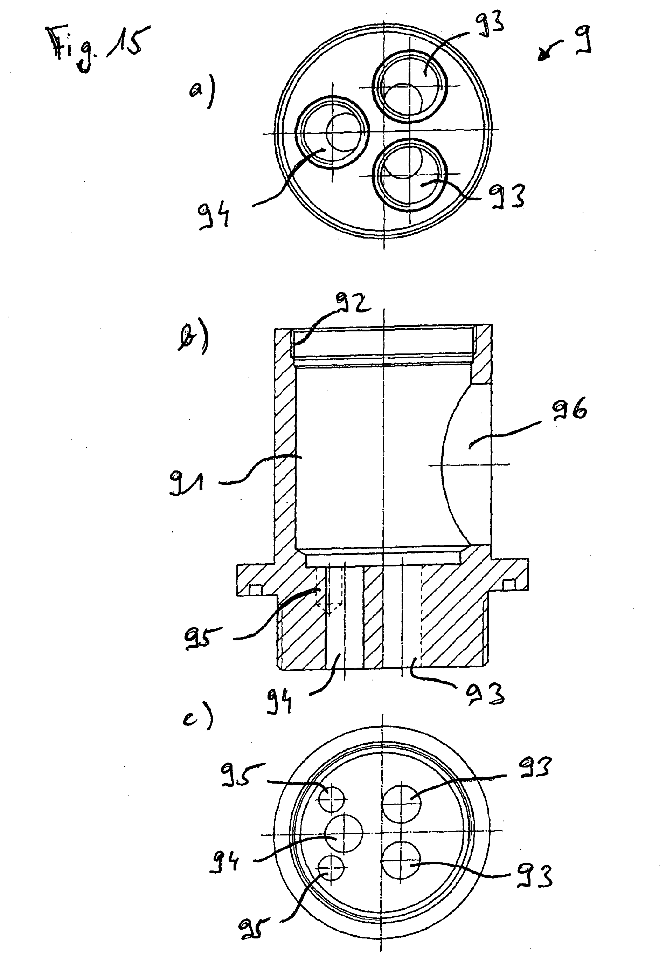

- Figur 15: die Armatur der Anordnung aus Figur 1
a) in der Ansicht von unten,
b) in Schnittdarstellung,
c) in der Draufsicht.

Die als Ausführungsbeispiel gewählte Einhandhebelmischerkartusche besteht im Wesentlichen aus einem Kopfstück 1, in das eine Spindel 2 axial hineinragt, die in einer drehbar gelagerten Spindelaufnahme 3 schwenkbar gelagert ist und in ein Gleitstück 4 eingreift, das mit einer Steuerscheibe 5 verbunden ist, die mit einer Durchlassscheibe 6 korrespondiert, welche über ein Dichtungsformteil 7 gegen ein Bodenstück 8 abgedichtet ist.

Das Kopfstück 1 ist hülsenartig ausgebildet und im Ausführungsbeispiel als Messingdrehteil hergestellt. An seinen dem Bodenstück 8 zugewandten Ende sind an dem Kopfstück 1 diametral zueinander zwei Stege 11 angeformt, an deren Innenseite eine Rastnut 111 eingebracht ist. Oberhalb der Rastnut 111 ist in dem Kopfstück 1 innen umlaufend ein Anschlag 12 für das Bodenstück 8 eingeformt. An seinem den Stegen 11 gegenüberliegenden Ende weist das Kopfstück 1 einen umlaufenden, durchmesservergrößerten Absatz 13 auf, in den mittig umlaufend eine Nut 131 zur Aufnahme eines O-Rings 17 eingebracht ist. Oberhalb des Absatzes 14 ist ein durchmesserreduzierter Abschnitt 15 angeordnet, an dem endseitig umlaufend eine Nase 151 angeformt ist. In den durchmesserreduzierten Abschnitt 15 sind diametral zueinander zwei Ausnehmungen 152 eingebracht, durch die jeweils zwei radiale Anschläge 153 gebildet sind. Die Anschläge 153 dienen der Drehbegrenzung der Spindelaufnahme 3. Für Ausführungsformen, bei denen das Mischungsverhältnis konstant eingestellt sein soll, können die Ausnehmungen 152 als Bohrung ausgeführt sein, in die der Achsstift 23 der Spindel 2 eingreift, wodurch eine Drehung der Spindelaufnahme 3 blockiert ist.

Auf den durchmesserreduzierten Abschnitt 15 des Kopfstücks 1 ist weiterhin ein Befestigungsring 16 aufgestülpt. Der Befestigungsring 16 weist außen umlaufend ein erstes Außengewinde 161 zum Einschrauben in eine Armatur 9 auf. Oberhalb des ersten Außengewindes 161 ist ein durchmesserreduzierter Absatz 162 angeordnet, der mit einem zweiten Außengewinde 163 versehen ist. Endseitig ist an dem Befestigungsring 16 ein durchmesserreduzierter Abschnitt 164 angeformt, durch den ein Anschlag 165 gebildet ist. Außer ist der durchmesserreduzierte Abschnitt 164 mit einem Außensechskant 166 versehen. An seinem dem durchmesserreduzierten Abschnitt 164 entgegengesetzten Ende ist innen in dem Befestigungsring 16 weiterhin umlaufend eine Nase 167 angeformt.

Die Spindel 2 ist im Ausführungsbeispiel im Wesentlichen quaderförmig ausgebildet. Etwa mittig ist an der Spindel 2 eine kreisringförmige koaxiale Anformung 21 zur Aufnahme eines - nicht dargestellten - Bedienteils angeformt. Unterhalb der Anformung 21 ist durch die Spindel 2 eine Bohrung 22 zur Aufnahme eines Achsstiftes 23 eingebracht. Endseitig ist an die Spindel 2 ein in Form einer Kugelscheibe ausgebildeter Steuerkopf 24 angeformt, der an seiner dem Gleitstück 4 zugewandten Seite abgeflacht ausgebildet ist.

Die Spindelaufnahme 3 ist als im Wesentlichen zylinderförmiges Kunststoffspritzgussteil ausgebildet. An seinem dem Gleitstück 4 zugewandten Ende ist an der Spindelaufnahme 3 ein zweistufiger Absatz 31 angeformt, dessen Kontur der Innenkontur des zweistufigen Absatzes 14 des Kopfstücks 1 entspricht, an der dieser anliegt. Oberhalb des zweistufigen Absatzes 31 ist durch die Spindelaufnahme 3 eine radiale Durchgangsbohrung 32 zur Aufnahme des Achsstifts 23 für die Spindel 2 eingebracht. Axial ist durch die Spindelaufnahme 3 eine Durchführung 33 für die Spindel 2 eingeformt, welche seitliche Anschläge 34 aufweist, durch die der Schwenkradius der Spindel 2 um den Achsstift 23 begrenzt ist. Die Durchführung 33 mündet in einer im Wesentlichen quaderförmig ausgebildeten Aufnahme 35 für das Gleitstück 4.

Das als Kunststoffspritzgußteil ausgeführte Gleitstück 4 ist im Wesentlichen in Form einer Kreisscheibe ausgebildet, auf der ein im Wesentlichen quaderförmiges Formstück 41 angeformt ist. Das Formstück 41 ist derart ausgebildet, dass es innerhalb der Aufnahme 35 der Spindelaufnahme 3 in Längsrichtung verschiebbar und in Querrichtung geführt ist. Axial ist durch das Gleitstück 4 das Formstück 41 durchdringend ein Langloch 42 zur Aufnahme des Steuerkopfes 24 der Spindel 2 eingebracht. An seiner dem Formstück 41 entgegengerichteten Unterseiten sind an dem Gleitstück 4 außen umlaufend weiterhin drei axiale Stege 43 zur Aufnahme der Steuerscheibe 5 angeformt.

Die Steuerscheibe 5 ist oval ausgebildet und als Keramikteil hergestellt. An seiner der Durchlassscheibe 6 zugewandten Seite weist die Steuerscheibe eine mittig angeordnete, eiförmige Einbuchtung 51 auf. Auf seiner der Einbuchtung 51 entgegengesetzten Oberseite sind in der Steuerscheibe 5 außen umlaufend weiterhin drei Ausnehmungen 52 zur Aufnahme der Stege 23 des Gleitstücks 4 eingebracht. Über die Ausnehmungen 52 ist die Steuerscheibe 5 mit dem Gleitstück 4 formschlüssig verbunden.

Die Durchlassscheibe 6 ist ebenfalls als Keramikteil ausgeführt. Durch die Durchlassscheibe 6 sind zwei Einlasskanäle 61 für kaltes bzw. warmes Wasser sowie ein relativ zu diesen vergrößert ausgebildeter Auslasskahal 62 für das Mischwasser eingebracht. Die Einlasskanäle 61 sowie der Auslasskanal 62 sind schräg zur Durchlassscheibe 6 durch diese hindurchgeführt. Seitlich sind an der Durchlassscheibe 6 versetzt zueinander drei Aussparungen 63 zur formschlüssigen Verbindung mit dem Bodenstück 8 eingebracht.

Das Dichtungsformteil 7 ist im Ausführungsbeispiel aus Gummi hergestellt. Das Dichtungsformteil 7 ist im Wesentlichen durch drei Ringe 71 gebildet, die jeweils an den beiden übrigen Ringen 71 angeformt sind, sodass eine kleeblattartige Kontur gebildet ist. An den Ringen 71 des Dichtungsformteils 7 sind an deren Oberseite sowie an deren Unterseite jeweils Dichtlippen 72 angeformt. Zur Formstabilisierung sind die Ringe 71 jeweils mit einem Stützring 73 versehen, welcher zwischen den Dichtlippen 72 der Ringe 71 angeordnet ist.

Das Bodenstück 8 ist im Wesentlichen zylinderförmig ausgebildet. In dem Bodenstück 8 sind zwei Einlassbohrungen 81 sowie eine Auslassbohrung 82 eingebracht, deren Mittelachsen ein gleichschenkliges Dreieck begrenzen. Die beiden Einlassbohrungen 81 münden in einen brillenartig ausgeformten Absatz 83, in den die Einlassbohrungen 81 umrandend eine Nut 84 zur Aufnahme zweier O-Ringe eingebracht ist. Seitlich ist in dem Absatz 83 eine Nut 831 eingeformt. Beabstandet zu dem Absatz 83 sind weiterhin zwei Stützfüße 85 an dem Bodenstück 8 angeformt, die mit dem Absatz 83 einen Kanal 851 begrenzen und die jeweils mit einem axialen Positionierstift 852 versehen sind. Die Stützfüße 85 sind derart angeordnet, dass sie mit dem Absatz 83 die Auslassbohrung 82 begrenzen. Der durch die Stützfüße 85 begrenzte Kanal 851 mündet in die in den Absatz 83 eingeformte Nut 831 und ermöglicht einen ausreichenden Wasserzufluss für einen seitlichen Auslasskanal einer Armatur 9.

Seitlich ist an dem Bodenstück 8 umlaufend ein Absatz 86 angeformt in den diametral zwei Ausnehmungen 861 zur Aufnahme der Stege 11 des Kopfstücks 1 eingebracht sind. Im Bereich der Ausnehmungen 861 sind Rastnasen 862 zum Eingriff in die Rastnut 111 der Stege 11 des Kopfstücks 1 angeformt. Diese Rastnasen 862 ermöglichen eine Rastverbindung zwischen dem Bodenstück 8 und dem Kopfstück 1. Oberhalb des umlaufenden Absatzes 86 ist umlaufend eine Nut 87 zur Aufnahme eines O-Rings 871 zur Abdichtung des Bodenstücks 8 gegenüber dem Kopfstück 1 eingebracht. Auf seiner dem Absatz 83 gegenüberliegenden Oberseite weist das Bodenstück 8 eine kleeblattartige Aufnahme 88 für das Dichtungsformteil 7 auf. Umlaufend der Aufnahme 88 sind gleichmäßig beabstandet zueinander drei Stege 89 zur drehfesten Aufnahme der Durchlassscheibe 6 angeformt. Die Stege 89 greifen in die Aussparungen 63 der Durchlassscheibe 6 ein. Zur Verbesserung des Formschlusses sind an zwei Stegen 89 Nasen 891 angeformt, welche in hierzu korrespondierende Aussparungen 63 der Durchlassscheibe 6 eingreifen.

Die Armatur 9 ist in Figur 15 schematisch dargestellt und im Wesentlichen zylinderförmig ausgebildet. Sie weist eine Kartuschenaufnahme 91 auf, an deren offenen Ende ein Innengewinde 92 zum Einschrauben des Befestigungsrings 16 des Kopfstücks 1 eingebracht ist. In die Kartuschenaufnahme 91 münden bodenseitig zwei Wasserzulaufanschlüsse 93 sowie ein Wasserablaufanschluss 94, deren Mittelachsen ein gleichschenkliges Dreieck bregrenzen. Beidseitig des Wasserablaufanschlusses 94 ist jeweils eine Positionierbohrung 95 zur Aufnahme der Positionierstifte 852 des Bodenstücks 8 eingebracht. Zur Verdeutlichung der Einsatzmöglichkeiten der erfindungsgemäßen Einhandhebelmischerkartusche ist weiterhin ein seitlicher Wasserablaufanschluss 96 vorgesehen.

In Figuren 9 bis 11 sind verschiedene Stellungen der aus der Steuerscheibe 5 und der Durchlassscheibe 6 gebildeten Scheibensteuerung schematisch dargestellt. In der Stellung gemäß Figur 9 ist keiner der Einlasskanäle 61 der Durchlassscheibe 6 von der Einbuchtung 51 der Steuerscheibe 5 überdeckt. Die Einlasskanäle 61 sind somit durch die Steuerscheibe 5 verschlossen. Es findet kein Wasserdurchlauf statt (geschlossene Stellung).

In der Stellung der Scheibensteuerung gemäß Figur 10 sind beide Einlasskanäle 61 für Warm- und Kaltwasser von der Einbuchtung 51 der Steuerscheibe 5 überdeckt, welche gleichzeitig auch den Auslasskanal 62 der Durchlassscheibe 6 überdeckt. Es findet eine Vermischung von Warm- und Kaltwasser innerhalb der Einbuchtung 51 der Steuerscheibe 5 statt, bevor das Mischwasser durch den Auslasskanal 62 der Durchlassscheibe 6 austritt. In der Position der Schreibensteuerung gemäß Figur 11 ist nur ein Einlasskanal 61 - hier der Kaltwasserzulauf - von der Einbuchtung 51 der Steuerscheibe 5 verdeckt, die diesen Einlasskanal 61 mit dem Auslasskanal 62 der Durchlassscheibe 6 verbindet. Es tritt somit nur Kaltwasser aus dem Auslasskanal 82 des Bodenstücks 8 aus.

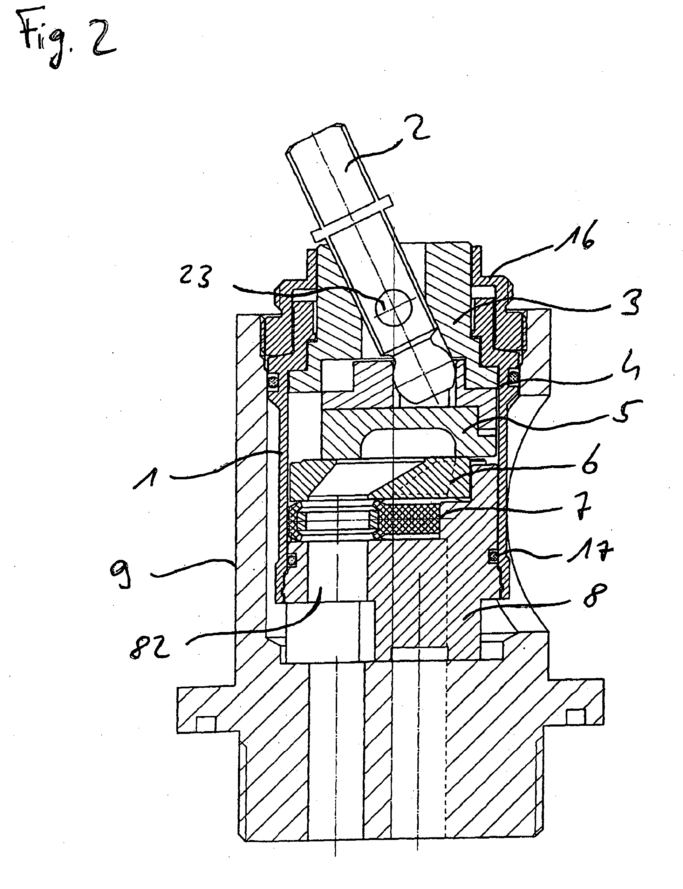

In Figur 2 ist die Anordnung mit der Scheibensteuerung gemäß Figur 10 gezeigt. Das Mischwasser tritt aus dem Auslasskanal 82 des Bodenstücks 8 durch den Kanal 851 in den zwischen dem Kopfstück 1 und der Kartuschenaufnahme 91 der Armatur 9 gebildeten Zwischenraum aus und gelangt so zu den Wasserablaufanschlüssen 94 und 96 der Armatur 9. Je nach gewünschter Ausgestaltung der Armatur ist somit eine seitliche Mischwasserabnahme durch den Wasserablaufanschluss 96, wie auch eine bodenseitige Wasserentnahme ermöglicht. Die Mischerkartusche selbst ist von dem aus dem Bodenstück 8 austretenden Wasser innerhalb der Kartuschenaufnahme 91 der Armatur 9 umspült. Durch den hinter der zwischen Rastnut 111 des Kopfstücks 1 und Rastnasen 862 des Bodenstücks 8 gebildeten Rastverbindung angeordneten Ö-Ring 17 ist ein Eintritt von Mischwasser in den Bereich hinter dem Bodenstück 8 und der dort angeordneten Steuermimik wirksam verhindert. Eventuelle Formänderungen des aus Kunststoff hergestellten Bodenstücks 8 werden durch den O-Ring 17 aufgenommen. Durch die Ausbildung des Kopfstücks 1 aus Messing sind Formänderungen des Kopfstücks 1 insbesondere im Bereich des Bodenstücks 8 vermieden.

Die Steuerung des aus der Auslaufsbohrung 82 des Bodenstücks 8 austretenden Wasserflusses erfolgt über die Spindel 2. Ein Verschwenken der Spindel 2 um den Achsstift 23 wird über den Steuerkopf 24 auf das Gleitstück 4 sowie auf die mit dem Gleitstück 4 formschlüssig verbundene Steuerscheibe 5 übertragen, wodurch eine Steuerung der Wassermenge bewirkt ist. Eine Drehung der Spindel 2 wird über den Achsstift 23 auf die in dem Kopfstück 1 drehbar gelagerte Spindelaufnahme 3 übertragen, welche mit dem Gleitstück 4 über das Formstück 41 formschlüssig verbunden ist. Hierdurch wird die Drehbewegung auf das Gleitstück 4 und somit auf die mit diesem formschlüssig verbundene Steuerscheibe 5 übertragen und bewirkt eine Einstellung des Mischverhältnisses der an den Einlasskanälen 61 der Durchlassscheibe 6 anliegenden Wasserströme.

Die Mischerkartusche wird über den Befestigungsring 16 mit der Armatur 9 verbunden und gegen den Boden der Kartuschenaufnahme 91 vorgespannt. Hierdurch erzielte Vorspannungskräfte bewirken einen Ausgleich von Fertigungstoleranzen der einzelnen Bauteile, insbesondere an Gleitstück 4, Steuerscheibe 5, Durchlassscheibe 6 und Bodenstück 8. Hierdurch bedingt kann es zu einem ungleichmäßigen Anpressdruck zwischen der Durchlassscheibe 6 auf der einen Seite sowie dem Bodenstück 8 auf der anderen Seite auf das Dichtungsformteil 7 kommen. Durch die elastische Ausbildung des Dichtungsformteils 7 mit den an diesem angeformten Dichtlippen 72 ist eine Lageangleichung des Dichtungsformteils 7 innerhalb der Aufnahme 88 des Bodenstücks 8 ermöglicht, wodurch eine zuverlässige Dichtwirkung gewährleistet ist. Die Dichtwirkung wird durch die mit Wasser hinterspülten Dichtlippen 72 unterstützt. Eine Formänderung der Ringe 71 des Dichtungsformteils 7, welche zu einer Beeinträchtigung der Dichtwirkung führen könnten, ist durch die in den Ringen 71 eingebrachten Stützringe 73 verhindert.

Der Befestigungsring 16 ist auf den durchmesserreduzierten Abschnitt 15 des Kopfstücks 1 übergestülpt, wobei die umlaufende Nase 151 bei Passieren der umlaufenden Nase 167 des Befestigungsrings 16 elastisch nach innen gezwängt wird. Nach Passieren der Nase 167 des Befestigungsrings 16 nimmt die Nase 151 des durchmesserreduzierten Abschnitts 15 des Kopfstücks 1 ihre ursprüngliche Position wieder ein. Der Befestigungsring 16 ist somit verliersicher an dem Kopfstück 1 gehalten. Das Einschrauben des Befestigungsrings 16 erfolgt über den Außensechskant 166. Über das zweite Außengewinde 163 des Befestigungsrings 16 ist die Befestigung beispielsweise eines weiteren Gehäuseteils der Armatur 9 ermöglicht.

## Patentansprüche

1. Einhandhebelmischerkartusche, umfassend ein Kopfstück (1), das ein Bodenstück (8) aufnimmt, sowie eine Scheibensteuerung mit einer Steuerscheibe (5), welche über eine zumindest schwenkbar gelagerte Spindel (2) verschiebbar ist, wobei ein Außengewinde zum Einschrauben in eine Armatur angeordnet ist, wobei ein Befestigungsring (16) angeordnet ist, der das Außengewinde (161) aufweist ist und der auf das Kopfstück (1) aufgestülpt und an diesem verliersicher gehalten ist und **dadurch gekennzeichnet, dass** an dem Befestigungsring (16) an seinem dem Kopfstück (1) zugewandten Ende zumindest bereichsweise eine umlaufende Rastnase (167) angeformt ist, die in eine umlaufend außen in dem Kopfstück (1) eingebrachte Rastnut (111) eingreift.

2. Einhandhebelmischerkartusche nach Anspruch 1, **dadurch gekennzeichnet, dass** die Steuerscheibe (5) über eine drehbar und schwenkbar gelagerte Spindel (2) drehbar und verschiebbar angeordnet ist.

3. Einhandhebelmischerkartusche nach Anspruch 1 oder 2, **dadurch gekennzeichnet, dass** an dem Kopfstück (1) an seinem dem Befestigungsring (16) zugewandten Ende zumindest bereichsweise umlaufend eine radial nach außen gerichtete Haltenase (151) angeformt ist, deren Außendurchmesser im Wesentlichen gleich dem Innendurchmesser des Befestigungsrings (16) ist.

4. Einhandhebelmischerkartusche nach einem der vorgenannten Ansprüche, **dadurch gekennzeichnet, dass** die Spindel (2) in einer Spindelaufnahme (3) schwenkbar gehalten ist, die in dem Kopfstück (1) drehbar gehalten ist.

5. Einhandhebelmischerkartusche nach Anspruch 4, **dadurch gekennzeichnet, dass** an der Spindelaufnahme (3) wenigstens ein radial nach außen kragender Stift (23) angeordnet ist, der in einer Führung des Kopfstücks (1) geführt ist.

6. Einhandhebelmischerkartusche nach Anspruch 5, **dadurch gekennzeichnet, dass** in der Spindelaufnahme (3) eine radiale Durchgangsbohrung (22) eingebracht ist, durch die ein Stift (23) geführt ist, der die Spindelaufnahme (3) an zwei gegenüberliegenden Seiten radial überragt und der die Schwenkachse für die Spindel (2) bildet, die eine Durchbohrung aufweist, durch die der Stift (23) geführt ist.

7. Einhandhebelmischerkartusche nach Anspruch 5 oder 6, **dadurch gekennzeichnet, dass** die Führung durch wenigstens eine Ausnehmung (152) gebildet ist, in welcher der Stift (23) eingreift und deren Seitenwände eine Anschlagbegrenzung für den Stift (23) bilden.

8. Einhandhebelmischerkartusche nach Anspruch 7, **dadurch gekennzeichnet, dass** die Ausnehmung (152) nach oben hin offen ausgebildet und durch den auf das Kopfstück (1) aufgebrachten Befestigungsring (16) geschlossen ist.

9. Einhandhebelmischerkartusche nach einem der Ansprüche 4 bis 8, **dadurch gekennzeichnet, dass** die Spindelaufnahme (3) an ihrer der Steuerscheibe (5) zugewandten Seite eine Aufnahme für ein Gleitstück (4) aufweist, in welche die Spindel (2) hineinragt.

10. Einhandhebelmischerkartusche nach Anspruch 9, **dadurch gekennzeichnet, dass** in dem Gleitstück (4) eine Öffnung (42) eingebracht ist, in welche die Spindel (2) endseitig eingreift, über welche Spindel (2) das Gleitstück (4) auf der Spindelaufnahme (3) auf ihrer der Steuerscheibe (5) zugewandten Endfläche verschiebbar ist.

11. Einhandhebelmischerkartusche nach Anspruch 10, **dadurch gekennzeichnet, dass** an dem Gleitstück (4) wenigstens ein aus seiner der Spindelaufnahme (3) abgewandten Oberfläche axial hervorstehender Steg (43) angeformt ist, der in eine Ausnehmung (52) der Steuerscheibe (5) eingreift.

12. Einhandhebelmischerkartusche nach einem der vorgenannten Ansprüche, **dadurch gekennzeichnet, dass** ein Bodenstück (8) angeordnet ist, in dem an seiner der Steuerscheibe (5) zugewandten Seite eine Aufnahme zur drehfesten Anordnung einer Durchlassscheibe (6) eingebracht ist.

13. Einhandhebelmischerkartusche nach Anspruch 12, **dadurch gekennzeichnet, dass** die Aufnahme durch umlaufend angeordnete Stege (89) gebildet ist, welche in Aussparungen, die seitlich in der Durchlassscheibe (6) angeordnet sind, eingreifen.

14. Einhandhebelmischerkartusche nach Anspruch 13, **dadurch gekennzeichnet, dass** die Stege (89) außen einen Kreisbogen beschreiben, dessen Durchmesser etwa gleich dem Innendurchmesser des Kopfteils ist, wobei an den Stegen (89) eine Nase (891) angeformt ist, die in eine hierzu korrespondierende Aussparung (63) der Durchlassscheibe (6) eingreift.

15. Einhandhebelmischerkartusche nach einem der vorgenannten Ansprüche, **dadurch gekennzeichnet, dass** das Kopfstück (1) aus Metall, vorzugsweise aus Messing hergestellt ist.

## Claims

1. Single-lever mixing cartridge comprising a headpiece (1) receiving a base piece (8), as well as a disc control with a control disc (5), which is movable via an at least swivably mounted spindle (2), wherein an external thread for screwing into an armature is arranged, wherein a mounting ring (16) is arranged, which holds the external thread (161) and which is put on the head piece (1) and is undetachably held thereon, **characterised in that** at the mounting ring (16) at its end facing the head piece (1), at least partially a circumferential snap-in nose (167) is moulded on, which engages with a latching groove (11), which is circumferentially inserted outside in the headpiece (1).

2. Single-lever mixing cartridge according to claim 1, **characterised in that** the control disc (5) is arranged rotatably and movably via a rotatably and swivably mounted spindle (2).

3. Single-lever mixing cartridge according to claim 1 or 2, **characterised in that** at the headpiece (1), at its end facing the mounting ring (16), a retaining collar (151) radially directed outward is at least partially circumferentially moulded on, whose outer diameter is substantially equal to the inner diameter of the mounting ring (16).

4. Single-lever mixing cartridge according to one of the previous claims, **characterised in that** the spindle (2) is swivably held in a spindle holder (3), which is rotatably held in the headpiece (1).

5. Single-lever mixing cartridge according to claim 4, **characterised in that** at least one pin (23) radially projecting outward is arranged at the spindle holder (3), which is guided in a guide of the headpiece (1).

6. Single-lever mixing cartridge according to claim 5, **characterised in that** a radial through-hole (22) is inserted in the spindle holder (3), through which a pin (23) is guided, which radially towers above the spindle holder (3) on two opposite sides and which forms the swivel axis for the spindle (2), which has a perforation, through which the pin (23) is guided.

7. Single-lever mixing cartridge according to claims 5 or 6, **characterised in that** the guide is formed by at least one recess (152), with which the pin (23) engages and whose side walls form a limit stop for the pin (23).

8. Single-lever mixing cartridge according to claim 7, **characterised in that** the recess (152) is open at the top and closed by the mounting ring (16) affixed to the headpiece (1).

9. Single-lever mixing cartridge according to one of claims 4 to 8, **characterised in that** the spindle holder (3) has a holder for a sliding block (4) at its side facing the control disc (5), into which the spindle (2) protrudes.

10. Single-lever mixing cartridge according to claim 9, **characterised in that** an opening (42) is inserted in the sliding block (4), with which the spindle (2) engages at the end, via which spindle (2) the sliding block (4) is movable on the spindle holder (3) at its end surface facing the control disc (5).

11. Single-lever mixing cartridge according to claim 10, **characterised in that** to the sliding block (4) at least one web (43) is moulded axially protruding from its surface facing away from the spindle holder (3), which engages with a recess (52) of the control disc (5).

12. Single-lever mixing cartridge according to one of the previous claims, **characterised in that** a base piece (8) is arranged, in which a holder for the torque-proof arrangement of a passage disc (6) is inserted at its side facing control disc (5).

13. Single-lever mixing cartridge according to claim 12, **characterised in that** the holder is formed by circumferentially arranged webs (89), which engage with cavities, which are laterally arranged in the passage disc (6).

14. Single-lever mixing cartridge according to claim 13, **characterised in that** the webs (89) outside describe a circular arc, whose diameter is approximately equal to the inner diameter of the headpiece, wherein a nose (891) is moulded on the webs (89), which engages with a recess (63) of the passage disc (6) corresponding hereto.

15. Single-lever mixing cartridge according to one of the previous claims, **characterised in that** the headpiece (1) is made of metal, preferably brazen.

## Revendications

1. Cartouche pour mélangeur monocommande, comprenant une pièce têtière (1) recevant une pièce de fond (8), ainsi qu'une commande de disque avec un disque de commande (5) déplaçable via une broche (2) se trouvant au moins en appui pivotant, sachant qu'un filetage externe est agencé pour permettre le vissage dans une robinetterie, sachant qu'est agencée une bague de fixation (16) présentant le filetage externe (161) et qui est emmanchée sur la pièce têtière (1) et retenue contre elle sans risque de se perdre, **caractérisée en ce que** sur la bague de fixation (16), à l'extrémité de cette dernière regardant la pièce têtière (1), une saillie de crantage (167) périphérique a été modelée au moins dans une zone, saillie qui engrène dans une gorge de crantage (111) ménagée périphériquement à l'extérieur dans la pièce têtière (1).

2. Cartouche pour mélangeur monocommande selon la revendication 1, **caractérisée en ce que** le disque de commande (5) est agencé via une broche (2) en appui rotatif et pivotant de manière à pouvoir tourner et être déplacé.

3. Cartouche pour mélangeur monocommande selon la revendication 1 ou 2, **caractérisée en ce que** sur la pièce têtière (1), à son extrémité regardant la bague de fixation (16), a été modelée une saillie de retenue (151) périphérique dirigée radialement vers l'extérieur au moins dans une zone, saillie dont le diamètre extérieur est essentiellement identique au diamètre intérieur de la bague de fixation (16).

4. Cartouche pour mélangeur monocommande selon l'une des revendications précédentes, **caractérisée en ce que** la broche (2) est maintenue pivotante dans un logement (3), lequel est maintenu tournant dans la pièce têtière (1).

5. Cartouche pour mélangeur monocommande selon la revendication 4, **caractérisée en ce que** sur le logement de broche (3) est agencée au moins une tige (23) faisant saillie vers l'extérieur et qui est guidée dans un guidage de la pièce têtière (1).

6. Cartouche pour mélangeur monocommande selon la revendication 5, **caractérisée en ce que** dans le logement (3) de broche a été ménagé un alésage (22) radial de part en part qui guide une tige (23) le traversant, tige qui dépasse radialement du logement de broche (3) sur deux côtés se faisant face et qui forme l'axe de pivotement de la broche (2), laquelle présente un alésage de part en part à travers lequel est guidée la tige (23).

7. Cartouche pour mélangeur monocommande selon la revendication 5 ou 6, **caractérisée en ce que** le guidage est formé par au moins un évidement (152) dans lequel la tige (23) engrène, et dont les parois latérales forment une butée limitatrice de la tige (23).

8. Cartouche pour mélangeur monocommande selon la revendication 7, **caractérisée en ce que** l'évidement (152) est configuré ouvert vers le haut et obturé par la bague de fixation (16) montée sur la pièce têtière (1).

9. Cartouche pour mélangeur monocommande selon l'une des revendications 4 à 8, **caractérisée en ce que** le logement (3) de broche présente, sur son côté regardant le disque de commande (5), un logement pour pièce coulissante (4) dans lequel la broche (2) pénètre.

10. Cartouche pour mélangeur monocommande selon la revendication 9, **caractérisée en ce que** dans la pièce coulissante (4) a été ménagé un orifice (42) dans lequel la broche (2) engrène par une extrémité, broche (2) via laquelle il est possible de déplacer la pièce (4) sur la surface terminale du logement (3) de broche regardant le disque de commande (5).

11. Cartouche pour mélangeur monocommande selon la revendication 10, **caractérisée en ce que** contre la surface de la pièce coulissante (4), surface qui ne regarde pas le logement (3) de broche, est modelée au moins une nervure (43) qui engrène dans un évidement (52) du disque de commande (5).

12. Cartouche pour mélangeur monocommande selon l'une des revendications précédentes, **caractérisée en ce qu'**est agencée une pièce de fond (8) dans laquelle, sur son côté regardant le disque de commande (5), a été ménagé un logement permettant d'agencer, sans pouvoir tourner, un disque de passage (6).

13. Cartouche pour mélangeur monocommande selon la revendication 12, **caractérisée en ce que** le logement est formé par des nervures (89) qui, agencées périphériquement, engrènent latéralement dans le disque de passage (6).

14. Cartouche pour mélangeur monocommande selon la revendication 13, **caractérisée en ce que** les nervures (89) décrivent à l'extérieur un arc de cercle dont le diamètre est approximativement égal au diamètre intérieur de la pièce têtière, sachant que contre les nervures (89) a été modelée une saillie (891) qui engrène dans un évidement correspondant (63) du disque de passage (6).

15. Cartouche pour mélangeur monocommande selon l'une des revendications précédentes, **caractérisée en ce que** la pièce têtière (1) est fabriquée en métal, de préférence en laiton.
